# EUROPEAN PATENT APPLICATION

(11) **EP 2 863 289 A1**
(43) Date of publication of application: **22.04.2015**
(21) Application number: 14194724.2
(22) Date of filing: 18.11.2008
(51) Int. Cl.: G06F 3/0362, G06F 3/039, G06F 3/042

(54) **Input device and method of detecting a user input with an input device**

(62) Divisional of application: 08020092.6
(71) Applicant: Studer Professional Audio GmbH, 8105 Regensdorf (CH)
(72) Inventor: Wussler, René, 8105 Watt (CH); Huber, Robert, 8954 Geroldswil (CH)
(74) Representative: Bertsch, Florian Oliver

(57) **Abstract**

The present invention relates to an input device, comprising:
- a multi-touch sensing display (101) adapted to detect multiple simultaneous touches or near touches to a surface (104) of the multitouch sensing display (101) as distinct input events; and
- at least one mechanical control element (102, 103) arranged on said
surface (104) of the multi-touch sensing display (101);
wherein the at least one mechanical control element (102, 103) is configured such that an actuation of the at least one mechanical control element (102, 103) generates an input event which is detected by the multi-touch sensing display (101).

## Description

### Field of the Invention

The invention relates to an input device and a method of detecting a user input with an input device, and more particularly to an input device comprising a multi-touch sensing display. The invention further relates to an audio console comprising at least one inventive input device.

### Background of the Invention

Modern electronic devices often require a plurality of control elements for an adjustment of parameters. An input unit for such an electronic device may be provided in the form of a console on which a plurality of mechanical control elements are arranged. Such an input device may be used to control for example audio equipment, video equipment, or a central control station for e.g. a power plant, a factory, or a traffic system, and the like. Control elements employed in these systems are often analogue elements with a predefined functionality. Accordingly, applications of such an input device are limited as the functionality cannot be changed or adjusted. In the case where control elements in the form of encoders, such as rotary encoders, are provided, the functionality may be changed, yet the problem arises that it is difficult to recognize which functionality is currently assigned to the control element. This is particularly the case if the functionality and the value of an associated parameter is displayed on a separate screen distant from the control element.

Complex electromechanical input elements, such as rotary encoders, further suffer from the drawback that they are complex and expensive, as well as difficult to mount. Mounting such an element requires a fair amount of space underneath the cover plate of the input device, and is further time and cost intensive. This is particularly a drawback for large input consoles comprising e.g. tens or hundreds of control elements.

Further, touchscreens are known in the art as input devices. These are often implemented in compact electronic devices, such as personal digital assistant (PDA) or more recently mobile phones. Several technologies for detecting a touch or a near touch to a surface are known in the art. Examples are a resistive touchscreen panel composed of several layers, wherein the layers are contacted at a certain point upon touching. A change in the electrical current through the layers is detected as a touch event and a controller derives the position on the panel where the touch has occurred. Further technologies comprise a capacitive touchscreen panel wherein a distortion of an electromagnetic field is detected, or frustrated total internal reflection (FT1R), wherein the disturbance of a reflection light path internal to a glass plate providing a sensitive surface is detected upon pressing an object against the surface. These touchscreens can be operated with objects like a finger or a pen, wherein e.g. a capacitive touchscreen already triggers an input event if an object comes to within a predetermined distance of the touchscreen surface (near touch). Conventionally, these touchscreens were only capable of detecting a single touch at a time. More recently, touchscreens were developed which are capable of detecting simultaneous multiple touches as separate input events. With such a multi-touch screen, a user is enabled to use two fingers to simultaneously manipulate two objects. Even though the aforementioned touchscreens provide a very flexible input means, they are not suited for setting a larger number of parameters. They are generally small sized and operated by one hand only. The adjustment of a graphical control element on the touchscreen, e.g. with a finger or a pen, further requires substantial motorical skills from a user and is rather imprecise. A graphical control element requires a substantial amount of space on the screen, thus preventing a provision of a plurality of such elements. A plurality of small control elements would be difficult and time-consuming to operate. Adjusting a plurality of parameters with a conventional touchscreen is thus not ergonomic, particularly if such adjustments have to be performed over a prolonged time.

Accordingly, there is a need to provide an input device which allows a flexible adjustment of parameters in an ergonomic manner. It is further desirable that such an input device provides a precise adjustment of parameters and is capable of informing a user which parameter is currently adjusted. Hardware and mechanics of such an input device should be kept simple, and the assembly should be cost efficient.

### Summary of the Invention

Accordingly, there is a need to overcome or at least mitigate the above-mentioned drawbacks.

This need is met by the features of the independent claims. The dependent claims describe preferred embodiments of the invention.

According to a first aspect of the invention, an input device comprising a multi-touch sensing display adapted to detect multiple simultaneous touches or near touches to a surface of the multi-touch sensing display as distinct input events is provided. The input device comprises at least one mechanical control element arranged on the surface of the multi-touch sensing display. The at least one mechanical control element is configured such that an actuation of the at least one mechanical control element generates an input event which is detected by the multi-touch sensing display.

Using such an input device, a precise adjustment of a parameter associated with the mechanical control element can be achieved. As the control element is mechanical and can physically be actuated by a user, the user is enabled to make precise adjustments in an ergonomic way. Further, the mechanical control element can be compact and is still easy to use. As the mechanical control element may provide the input to the touchscreen, it can be freely configured, i.e. its functionality may be adjusted as desired. Even further, in such a configuration, it is possible to display the present functionality of the mechanical control element on the multi-touch sensing display in proximity to the control element. Thus, a user is enabled to immediately identify the functionality, thereby preventing confusion or a mix-up. This is particularly advantageous for applications where a multitude of control elements needs to be provided. Not only is it possible to display information in proximity to the control element with such an input device, but the area surrounding the control element is touch-sensitive, thus providing an additional possibility for a user input. As the display is multi-touch sensing, it is capable of detecting a simultaneous actuation of the control element and an input by touching the surface. Even further, the configuration of the input device with a multi-touch sensing display enables the arrangement of a plurality of mechanical control elements on the surface, which may be simultaneously actuated. Accordingly, an ergonomic adjustment of a plurality of parameters can be achieved with the input device. The functionality of control elements of the input device may be adjusted as desired, while still enabling a user to associate a particular functionality with the respective control element.

According to an embodiment of the invention, the at least one mechanical control element is mechanically mounted to the surface of the multi-touch sensing display. Mechanically mounting the control element may comprise but is not limited to adhering the control element to the service, e.g. using an adhesive, inserting one or more bolts into cavities or holes on the surface of the display, engaging or latching the control element with a structure on the surface, and the like. Mounting the mechanical control element in such a way has the advantage that it can be securely fixed to the surface, while requiring only little effort. Accordingly, the control element can time and cost efficiently be mounted to the surface. Mounting is further facilitated as the control element can have a very simple structure or design and may not require additional space underneath the surface of the multi-touch sensing display. Further, no additional support structures may be required on the surface, such as mounting bars or beams running across the surface. Even though the mechanical control element is mounted to the surface, the display and touch-sensitive area of the multi-touch sensing display can be kept large, as only a small area may be covered by the control element.

According to another embodiment, the input device comprises at least two mechanical control elements, wherein the multi-touch sensing display is adapted to detect a simultaneous actuation of the at least two mechanical control elements as separate input events. With such an input device, two or more parameters may be simultaneously adjusted. A great versatility of the input device is thus achieved.

According to a further embodiment, the at least one mechanical control element comprises a trigger element. When the trigger element touches the surface at a position or comes within a predetermined distance of the surface at the position, the trigger element triggers the input event at said position on the surface. The multi-touch sensing display is adapted to detect the position at which the input event is triggered. Using such a trigger element, a precise adjustment of a parameter associated with the mechanical control element may be achieved. It should be clear that if the trigger element is held at a position at which an input event is triggered, this may also be detected by the multi-touch sensing display, so that the actual position and thus the state of the control element may be determined. Configuring the multi-touch sensing display and the trigger element in such a way that an input event already occurs a predetermined distance of the surface has the advantage that the trigger element does not need to touch the surface, whereby frictional forces and abrasion of the display surface and the trigger element may be prevented.

The control element may comprise a movable component. The trigger element may then be arranged on the movable component such that when actuating the control element by moving the movable component, the multi-touch sensing display detects the movement of the trigger element relative to the surface. The control element may for example comprise an element fixedly mounted to the surface, the movable component being movable relative to said fixed component. When moving the movable component and thus the trigger element, successive input events may be triggered, which may enable a determination of the positioning of the movable component. With such an arrangement, a plurality of different types of control elements with different degrees of freedom can be realized.

As an example, the movable component may be formed so that when actuating the control element, the trigger element is moved in a plane substantially parallel to the surface at a distance to the surface at which it triggers an input event. Input events are then successively triggered for different positions on the surface. Using such an arrangement, control elements in form of a slider, a turn button, and others may be realized. As the positioning of such a control element may be simply read out by the multi-touch sensing display, the control element may not require any additional mechanical or electrical components, thus enabling the realization of plural more or less complex control elements with simple mechanics.

According to another example, the movable component may be formed so that when actuating the control element, the trigger element is moved substantially perpendicular to the surface between a position with a first distance to the surface and a position with a second distance to the surface chosen such that the movement of the trigger element triggers the input event. With such a design, a push button, a rocker, a joystick like element, or a similar control element may be realized. Again, such an element may have a very simple mechanical structure. It should be clear that the input device may comprise both an element wherein the trigger element is moved in a plane substantially parallel to the surface and an element wherein the trigger element is moved substantially perpendicular to the surface. Of course, it is also possible to combine both types of movement in a control element.

According to another embodiment, the input device further comprises a processing unit. The multi-touch sensing display is adapted to detect a position of the input event generated by said control element, and the processing unit is adapted to assign a value to a parameter controlled by said mechanical control element in dependence on the position at which the input event was detected. Accordingly, the setting of the control element can be easily determined by making use of the capability of the multi-touch sensing display to determine the position of an input event. A precise adjustment of the parameter value may thus be enabled.

The input device may be connected to an audio mixing device. The above-mentioned parameter may then control a function of the audio mixing device. As audio mixing devices generally require the adjustment of a multitude of parameters, using the input device to control functions of the audio mixing device is advantageous. This is particularly true as the input device may be adapted to display the functionality and a parameter value associated with a particular control element on said multi-touch sensing display. Thus, in the case where a plurality of control elements is provided on the input device, an efficient configuration of the input device can be performed and an ergonomic adjustment of parameters for the audio mixing device can be achieved.

According to a further embodiment, the multi-touch sensing display comprises one of a capacitive touchscreen panel, an inductive touchscreen panel, or a total internal reflection based touchscreen panel. Such touchscreen panels may be adapted to detect simultaneous touches and may be used with the present invention.

According to yet another embodiment, the multi-touch sensing display comprises a display unit with an integrated array of optical sensors. The display unit may for example be a liquid crystal display (LCD) unit. The optical sensors may be capable of detecting touches or near touches to the surface. As a large number of sensors may be arranged in the display unit with relatively small spacing in-between them, a high resolution for the detection of simultaneous touches or near touches can be achieved. Further, in such a configuration, the upper surface of the multi-touch sensing display may be manufactured out of a scratch resistant transparent surface, such as glass. Such a surface may further facilitate the mounting of a mechanical control element.

The multi-touch sensing display may be adapted to display an indication regarding a value or a type of a parameter controlled by the mechanical control element within a predetermined region adjacent to the mechanical control element. The association of a particular functionality with a control element and the adjustment of a parameter value are thus facilitated.

According to another aspect of the invention, a method of detecting a user input with an input device comprising a multi-touch sensing display adapted to detect multiple simultaneous touches or near touches to a surface of the multi-touch sensing display as distinct input events and at least one mechanical control element arranged on the surface of the multi-touch sensing display is provided. According to the method, an input event is generated in response to an actuation of the at least one mechanical control element, and the input event is detected by the multi-touch sensing display. A parameter associated with the at least one mechanical control element is adjusted in accordance with the detected input event. Similar advantages as outlined above with respect to the input device are also achieved with the inventive method of detecting a user input.

According to an embodiment, at least two mechanical control elements are provided on the input device, the method comprising a detecting of at least one separate input event for each of the at least two mechanical control elements in response to a simultaneous actuation of the least two mechanical control elements. In accordance with the input event detected for the respective mechanical control element, a parameter associated with the mechanical control element is adjusted. Such a method may enable a simultaneous control of a plurality of parameters with the input device.

The detecting of an input event may comprise a determining of a position on the surface of the multi-touch sensing display at which the input event occurred and a determining of a setting of the parameter associated with the mechanical control element on the basis of the determined position. A setting of a parameter may thus be simply adjusted by making use of the capability of the multi-touch sensing display to determine a position at which a touch or a near touch occurred.

According to a further embodiment, the actuation of the control element comprises a moving of a trigger element arranged on the control element relative to the surface. An input event is generated by reflecting and/or scattering light off the trigger element onto optical sensors in response to the moving of the trigger element. The optical sensors are provided in the multi-touch sensing display adjacent to the surface. The detecting of an input event comprises a detection of said light by the optical sensors. As an example, an array of photosensitive elements may be arranged underneath the surface. The trigger element may then be a reflecting or absorbing element, a movement of which relative to the surface will be detected by a change of the intensity of light detected by particular photosensitive elements. The position or a change in position of the trigger element may thus be determined. With such a method, an adjustment of the parameter with high resolution without contact between the surface and the trigger element can be achieved.

According to a further embodiment, the actuation of the control element comprises a moving of a trigger element arranged on the control element relative to the surface. The generating of an input event comprises a disturbing of an electrical field established adjacent to the surface by the movement of the trigger element. The detecting of the input event comprises a detecting of a position at which the disturbance of the electrical field occurred. Such a method may for example by performed by using a multi-touch sensing display comprising a capacitive touchscreen panel.

According to another aspect of the invention, an audio console comprising at least one of the above-mentioned input devices is provided. Such an audio console has the advantage that a plurality of parameters can be effectively and ergonomically adjusted.

In an embodiment of the audio console, the input device comprises a plurality of mechanical control elements arranged in an array and regions sensitive to simultaneous touches or near touches between said elements. The multi-touch sensing display is further configured to display information relating to parameters associated with the plurality of mechanical control elements in the regions. It may for example display a type and a value of a parameter associated with a control element next to the control element. The control elements are thus easily configurable, whereas relevant information relating to associated parameters is provided to a user. The user may further effectuate further user inputs by making use of the touch-sensitive areas adjacent to the control elements. A very comprehensive and flexible control of the audio console is thus achieved.

It is to be understood that the features mentioned above and those yet to be explained below can be used not only in respective combinations indicated, but also in other combinations or in isolation, without leaving the scope of the present invention.

### Brief Description of the Drawings

The foregoing and other features and advantages of the invention will become further apparent from the following detailed description read in conjunction with the accompanying drawings, in which:
- Fig. 1: is a schematic drawing of an input device according to an embodiment of the invention;
- Fig. 2: is a schematic drawing of an input device according to an embodiment of the invention comprising a rotary knob as a mechanical control element;
- Fig. 3: is a schematic drawing of an input device according to an embodiment of the invention comprising a sliding controller as a mechanical control element;
- Fig. 4: is a schematic drawing of an input device according to an embodiment of the present invention comprising a push button as a control element;
- Fig. 5: is a schematic drawing illustrating an input device according to an embodiment of the invention using photosensitive elements for detecting an actuation of a control element;
- Fig. 6: is a schematic drawing illustrating an input device according to an embodiment of the invention using a capacitive element for triggering an input event;
- Fig. 7: is a flow diagram illustrating a method according to an embodiment of the invention;
- Fig. 8: is a schematic drawing showing an audio console according to an embodiment of the present invention.

### Detailed Description

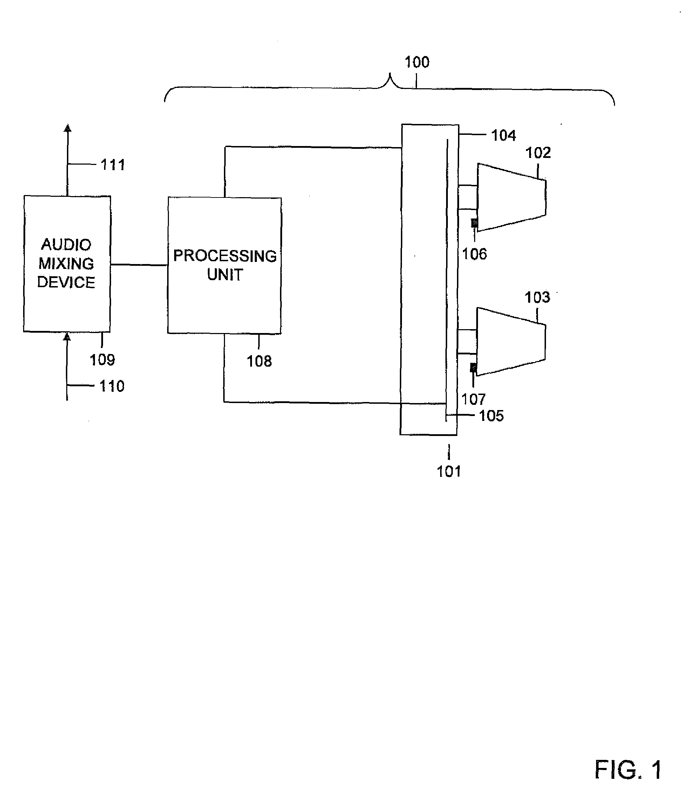

Fig. 1 shows an embodiment of an inventive input device 100. The input device 100 comprises a multi-touch sensing display 101 and two mechanical control elements in form of two rotary knobs 102 and 103. These are fixedly mounted to surface 104 of the multi-touch sensing display 101. Below surface 104, display 101 comprises an array of optical sensors or photosensitive elements shown as line 105. The display 101 may for example comprise a thin film transistor (TFT) LCD display. The design of a TFT LCD display with integrated photosensitive elements is known in the art and details can be found e.g. in the document type titled "Active matrix LCD with integrated optical touchscreen", www.planar.com/advantages/whitepapers/ docs/planar-AMLCD-Optical-Touchscreen.pdf. Light emitted by the display 101 may be absorbed, scattered or reflected by trigger elements 106 and 107. If one of the control elements 102 and 103 is actuated by turning, the intensity of light reflected onto photosensitive elements located underneath the trigger element at the previous and the new position of the trigger element changes, thereby generating an input event. Such an input event can be detected by the multi-touch sensing display 101 in form of a change of a photocurrent or a change of a current through the photosensitive elements.

It should be clear that the multi-touch sensing display may not only be adapted to generate a position dependent signal in response to an input event, but that it may also comprise means for determining the position on its surface where the input event has occurred, e.g. a processor and the like. As such, the multi-touch sensing display may deliver a signalling corresponding to sensor data out of which a processing unit determines an occurrence and position of an input event, or it may directly deliver the position of a detected input event, e.g. in form of two dimensional (e.g. x and y) coordinates relative to the surface. The setting of the control element originating the input event may then be determined by a downstream processing unit. It is thus only important that the multi-touch sensing display is capable of resolving the position at which an input event occurred.

Processing unit 108 interfaces multi-touch sensing display 101. Processing unit 108 both provides the display signal to display 101 and reads out the array of photosensitive elements of display 101. A readout may be performed at predetermined times, at which processing unit 108 obtains an image of light intensities detected by the photosensitive elements at respective positions on surface 104 of display 101. By analyzing the so obtained image data, processing unit 108 can determine a position in the data at which a change in intensity occurred. Processing unit 108 is provided with information at which position what type of control element is located, and which function is currently assigned to the respective control element. By determining the position of an input event and thus the position of the trigger element relative to the surface 104, the processing unit 108 can determine the setting of the control element and assign a corresponding value to a parameter of the function controlled by the control element. It should be clear that a particular setting of the control element does not need to correspond to a particular value of an associated parameter, but that an activation of the control element by e.g. rotation through a particular angle may define a corresponding change of the parameter value.

Thus, the actual position of trigger elements 106 and 107 can be detected by the photosensitive elements of the multi-touch sensing display 101 and determined by processing unit 108. Not only can input device 100 detect simultaneous actuation of control elements 102 and 103 as separate or distinct input events, i.e. can resolve the positions relative to the surface at which the input events occurred, but it is also capable of detecting a touch or a near touch to surface 104 in areas of display 101 not covered by the control elements and provided with said optical sensors. Further, processing unit 108 can control display 101 to display e.g. the type and the value of the parameter controlled by control element 102 or 103 next to the respective control element. As in the present embodiment, optical sensors are used, surface 104 may be a glass surface and accordingly, rotary knobs 102 and 103 may be simply mechanically mounted to surface 104, e.g. by using an adhesive.

Parameter values adjusted with control elements 102 and 103 are provided to audio mixing device 109. Audio mixing device 109 comprises plural audio inputs 110 and outputs 111 for audio signals. Audio mixing device 109 processes the audio signals 110 in accordance with parameters received from processing unit 108. Audio mixing devices, e.g. a digital mixer, are known in the art and will not be further elaborated here.

Although the above embodiment has been described with respect to a multi-touch sensing display comprising optical sensors, it should be clear that other means of detecting input events such as capacitive or resistive touchscreen panels or the like may be used. Further, parameter values may be provided to any type of device by processing unit 108, such as a control station for a machine, a power plant, or any other electronic device, such as a computer or a station for video processing. Display 101 of input device 100 may thus not only display information relating to the function controlled by a control element, but also data and information provided by a device connected to input device 100.

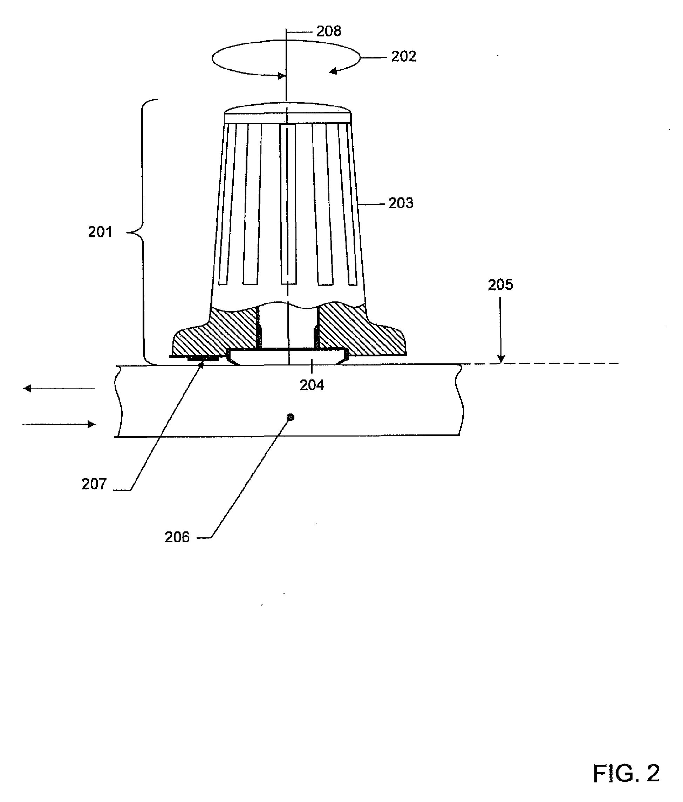

Fig. 2 shows a mechanical control element 201 in form of a rotary knob which can be turned in two directions as indicated by arrow 202. Rotary knob 201 comprises a movable component 203 and a shaft with base 204 fixedly mounted to surface 205 of the multi-touch sensing display 206. Shaft and base 204 are mounted by an adhesive to surface 205. Moveable component 203 can be rotated on the shaft 205, thereby moving trigger element 207 in a plane substantially parallel to surface 205. The distance between the trigger element 207 and surface 205 is chosen such that its position can be detected by the multi-touch sensing display 206. As a result, turning the rotary knob 201 generates subsequent input events at positions lying on a circle around the rotary axis 208 of the rotary knob 201.

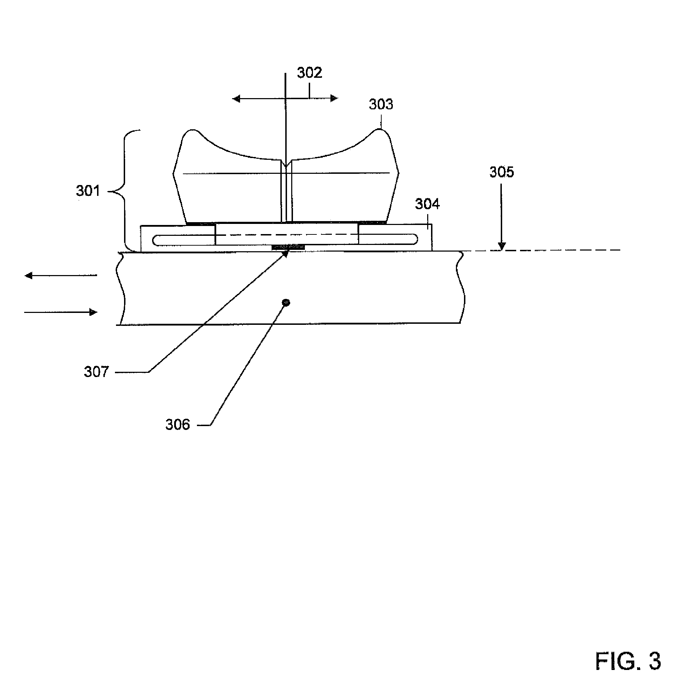

In the embodiment of Fig. 3, the input device comprises a mechanical control element in form of sliding controller 301. Movable component 303 can be moved linearly in a direction horizontal with respect to surface 305 of the multi-touch sensing display 306 (arrow 302). Moveable component 303 is slidably received in support structure 304 fixedly mounted to surface 305. As mentioned above, there are several possibilities of mounting support structure 304 to surface 305 including glueing or cementing, engaging elements of the support structure with a recess formed on the surface 305, providing one or more holes through display 306 and attaching the support structure by bolts, and the like. Actuation of the control element 301 results in a movement of the trigger element 307 fixed to movable component 303 in a horizontal direction relative to surface 305. The spacing between trigger element 307 and surface 305 is again chosen such that the position of trigger element 307 can be detected by the multi-touch sensing display 306. The spacing will depend on the particular detection mechanism employed. When using optical sensors or a capacitive touch screen panel, trigger element 307 may not touch surface 305, whereas for a resistive touchscreen panel or a method based on total internal reflection, trigger element 307 may touch surface 305. Actuation of the sliding control 301 results in the generation of input events at positions on surface 305 lying along a line. By detecting the positions of the input events, the movement of the sliding controller 301 can be inferred, and a value of an associated parameter can be changed accordingly.

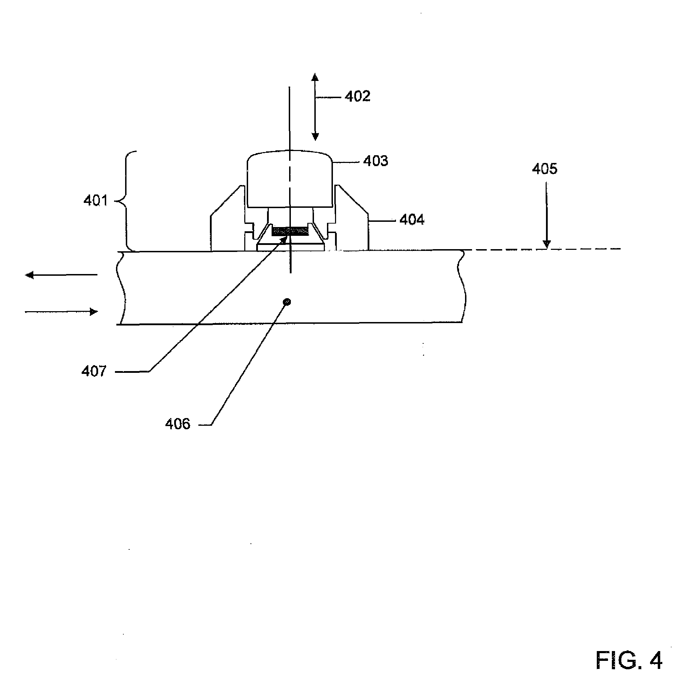

Another embodiment of an inventive input device is shown in Fig. 4, where the movable component 403 of push button 401 can be moved in a direction indicated by arrow 402 substantially perpendicular to surface 405 of the multi-touch sensing display 406. Movable component 403 of push button 401 is supported by supporting structure 404 fixedly mounted to surface 405. When actuating the control element 401 by applying pressure to the movable component 403, the distance between the trigger element 407 provided on the movable component 403 and the surface 405 is decreased, whereby an input event is triggered. Again, depending on the type of multi-touch sensing display, the distance in the pushed state of push button 401 may be such that trigger element 407 is located a predetermined distance from surface 405 or touches surface 405. As an example, the intensity of light detected by optical sensors underneath surface 405 may increase or decrease in the pushed position, without the necessity of the trigger element 407 touching the surface. This does not preclude that in the non-actuated state, the multi-touch sensing display 406 is capable of determining the position of trigger element 407. It is just important that trigger element 407 generates an input event when push button 401 is actuated.

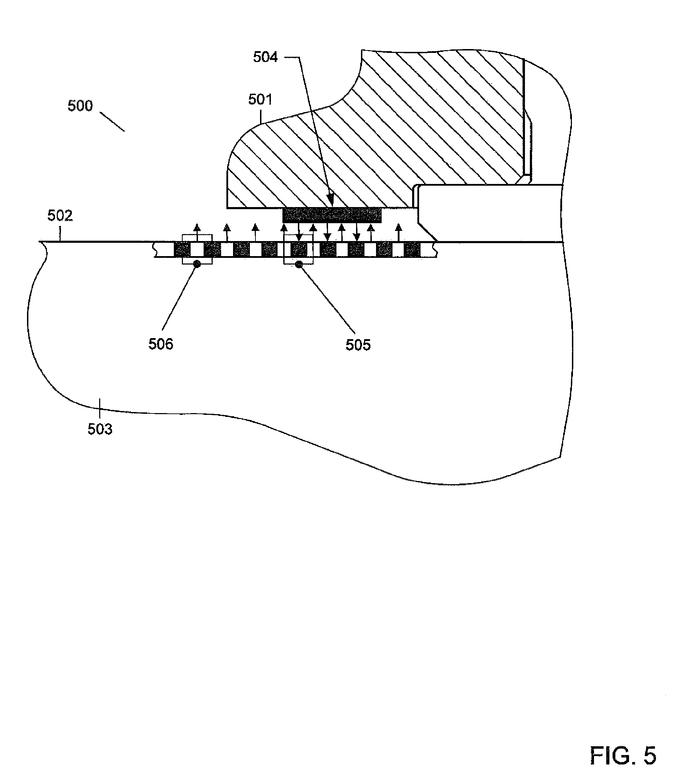

The embodiment of Fig. 5 illustrates the use of optical sensors for detecting the positioning of a trigger element. The input device 500 of Fig. 5 comprises a control element in form of rotary knob 501. Rotary knob 501 is mounted to surface 502 of the multi-touch sensing display 503. Display 503 comprises photosensitive pixels 505 (shown as black squares) and display pixels 506 (shown as white squares). For displaying an image, display pixels 506 emit light, as indicated by arrows. The emitted light is now reflected by the reflective trigger element 504 mounted to the rotary knob 501. The reflected light is detected by the photosensitive pixels 505 (as indicated by arrows). Accordingly, the position of the reflective trigger element 504 relative to surface 502 can be detected by the photosensitive pixels 505 and determined by reading out the detected intensity values and analyzing the intensity distribution. In such a configuration, it may be particularly beneficial to design the remaining surface of the control element 501 facing surface 502 to be non-reflective, i.e. absorptive, for the light emitted by display 503. Further, it may be advantageous to control the emission of light by the display pixels located in the area of surface 502 over which the trigger element 504 may be moved such that they emit light with a predetermined intensity, e.g. near maximum intensity, so that a high signal is received from photosensitive pixels 505 and a precise determination of the positioning of the trigger element is achieved. It should be clear that other implementations are also conceivable, such as providing an absorptive trigger element and a reflective surface of the control element 501 facing the surface 502 of the display 503.

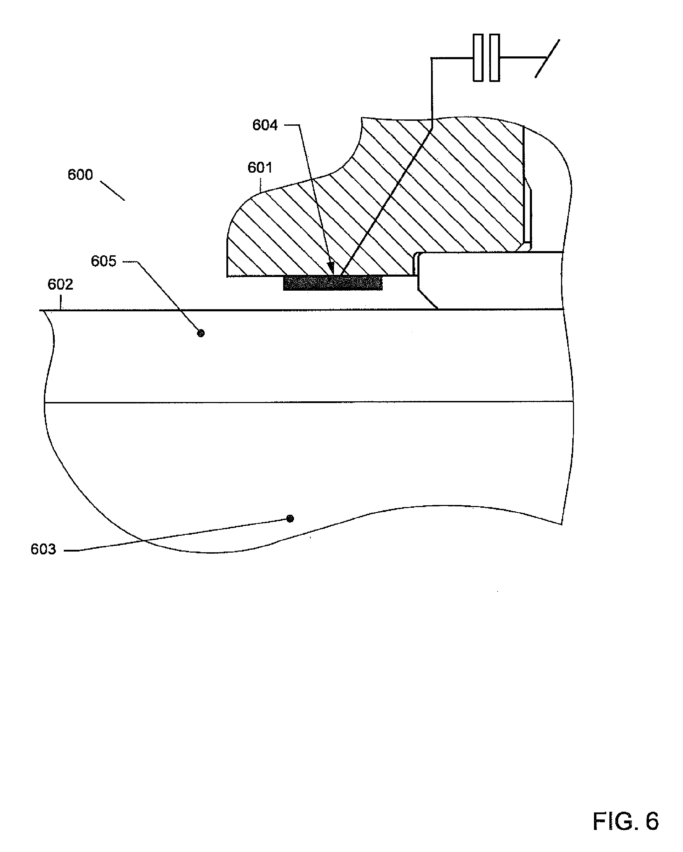

In the embodiment of Fig. 6, the input device 600 comprises at least one control element, such as rotary knob 601. The multi-touch sensing display 603 comprises a capacitive touch-screen panel with a capacitive sensitive layer 605. The functioning of a capacitive multi-touch sensing display is known to a person skilled in the art and will not be explained in further detail here. Details on a capacitive multipoint touchscreen can for example be found in the US Patent Publication US 2006/00917991 A1 which is incorporated herein by reference in its entirety.

A conventional capacitive touchscreen panel may for example comprise a capacitive sensing layer of a metal oxide, such as indium tin oxide, which conducts an electrical current across the sensor panel which is applied by electrodes on each corner of the panel. As an example, a square wave voltage may be applied. When a panel is touched, a charge transport occurs, which can be measured in form of a current at the corners of the panel. The position of the touch event can be determined by evaluating the resulting currents at the corners of the panel. To detect multiple simultaneous touches, the touchscreen panel may comprise a plurality of transparent sensor nodes which may again be formed of a conductive medium such as a metal oxide, spatially separated into electrodes and traces. Different coordinates on the display may then be represented by the different electrodes, and the traces are used to connect the electrodes to a capacitive sensing circuit. Accordingly, a change of a capacitance occurring at a particular electrode can be recognized, and by using a plurality of electrodes, the positions of simultaneously occurring touches can be resolved. For triggering an input event, the capacitive trigger element 604 is provided. An electrical field established adjacent to a sensing node of capacitive sensitive layer 605 at a position underneath the trigger element 604 is disturbed by the trigger element, which can be detected as a change in capacitance at the sensing node. Accordingly, the position of trigger element 604 relative to surface 602 can be determined. Actuation of control element 601 results in a change of capacitance of another sensing node, which again generates an input event the position of which relative to surface 602 can be determined by a capacitive sensing circuit. Capacitive trigger element 604 may be grounded, or may be grounded when a user touches control element 601. It is further conceivable to arrange sensing nodes of the capacitive multi-touch sensing panel such that a high resolution of the positioning of trigger element 604 is achieved, e.g. by closely spacing them in proximity of the control element. Again, multi-touch sensing display 603 is capable of sensing a simultaneous actuation of control element 601 and a touch to surface 602, as well as of displaying information.

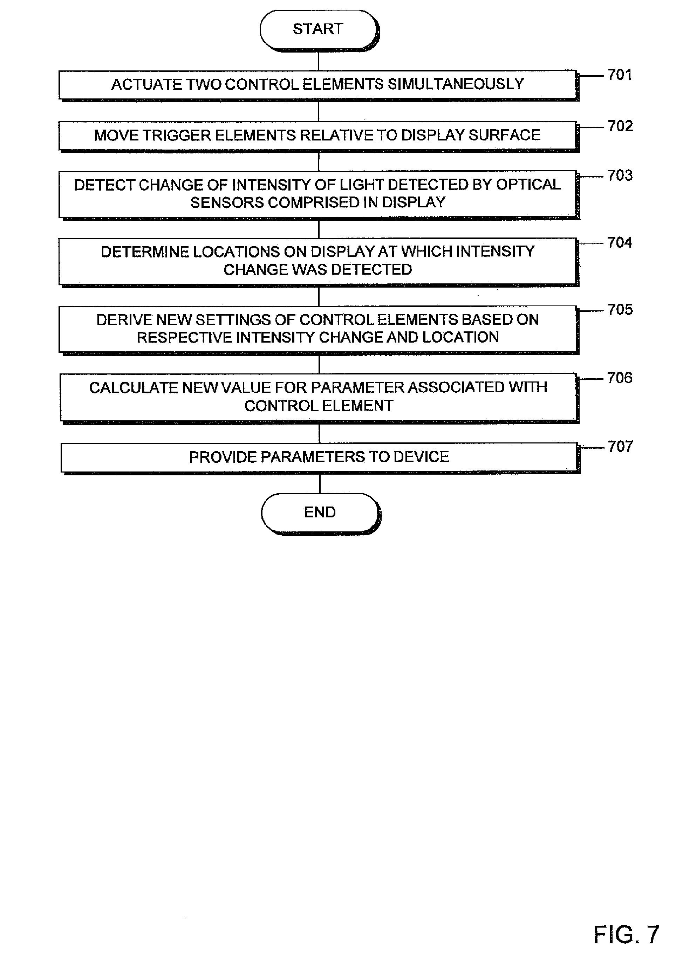

Fig. 7 shows a flow diagram of an embodiment of a method according to the invention. The method may be performed by e.g. using the input device of Fig. 1 or Fig. 5. In step 701, two control elements are actuated simultaneously. It should be clear that these could be any types of control elements, such as rotary knobs, sliders, rockers, push buttons, and the like.

By actuating the control elements, trigger elements of the control elements are moved relative to the display surface (step 702). Optical sensors located in the display detect light emitted by the display and reflected by the trigger elements. Due to the movement of the trigger elements, a change of the intensity of the light detected by the optical sensors occurs, which is detected in step 703. On the basis of the detected intensity changes, the locations or positions on the display at which the intensity changes occurred are determined in step 704. A new setting of each control element is derived in step 705 on the basis of the respective intensity change and its location. It may for example be found that a slider was moved a particular distance or that a rotary knob was turned through a particular angle. On the other hand, the absolute setting of the control element may be determined, such as the new position of a slider or of a rotary knob. A new value for a parameter associated with the control element is then calculated in step 706 on the basis of the derived new setting for each control element. As an example, a particular switching function may have been assigned to a push button, and an associated parameter value may be changed from '1' for an on position to a '0' for an off position upon actuation. The parameter value may also be adjusted according to a determined travel distance or turn angle of a control element, or to the determined absolute new setting of the control element. The parameters with their values are then provided to a device connected to the input device in step 707. It should be clear that the above method may comprise further steps, such as detecting a touch to a surface adjacent to a control element and adjusting a parameter on the basis of the detected touch, or changing the functionality of a control element in accordance with a position of a detected touch or the like. As such, graphical control elements may be provided, according to which the functionality of the mechanical control elements may be changed.

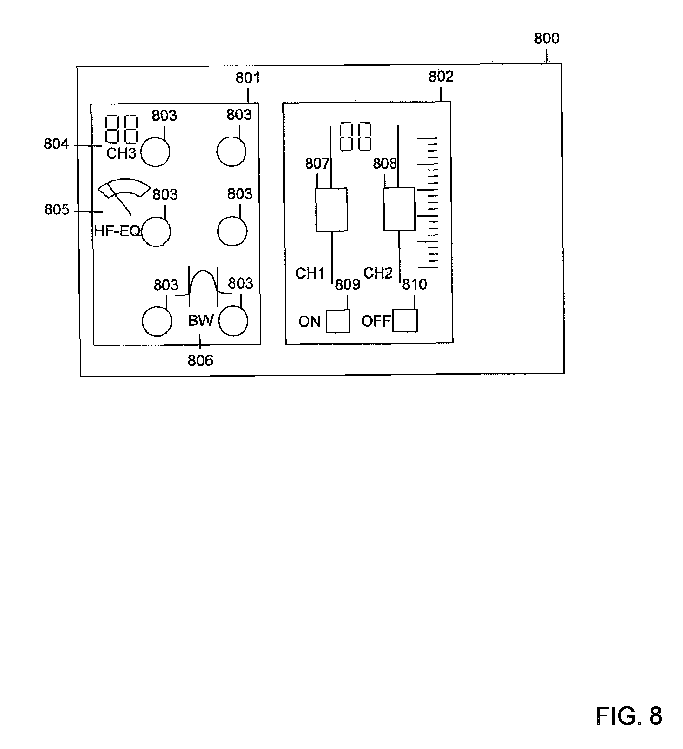

Fig. 8 shows an audio console according to an embodiment of the invention implementing two input devices 801 and 802 according to embodiments of the invention. Input device 801 of audio console 800 comprises plural mechanical control elements in form of rotary buttons 803. The input devices are shown in a view from above, as indicated in Fig. 2 by arrow 205. The portions of input devices 801 and 802 visible to a user are touchsensitive and are operative to display information. Areas 804, 805 and 806 adjacent to rotary knobs 803 are used to display the type of parameter and the parameter value currently adjusted by the respective rotary knob. In the present example, area 804 indicates the adjustment of a numerical value for a particular channel, area 805 indicates the adjustment of a high frequency equalizer using a needle indicator, whereas area 806 indicates the adjustment of a bandwidth.

Input device 802 comprises sliding controls 807 and 808. These may for example be faders, with graphical indications on a channel to be adjusted and of a present setting provided next to them. Further, push buttons 809 and 810 are provided, again with their present setting indicated graphically in an area adjacent to them. Although control elements 807 to 810 are mechanical control elements in the present embodiments, it should be clear that some of these may also be implemented as graphical control elements, which may be actuated by touching the surface of input device 802 at a position where the control element is displayed.

A person skilled in the art will appreciate that different types of mechanical and graphical control elements may be arranged on a touch-sensitive surface of the input device, and that mechanical control elements other than the ones mentioned above are conceivable. Apart from being used in an audio console 800, input devices according to embodiments of the invention may also be implemented in other devices such as control stations of a factory or a power plant. As mentioned above, the invention is particularly advantageous for devices requiring a large number of parameters to be adjusted, preferably with a flexible configuration of the control elements. The skilled person will further recognize that types of multi-touch sensing displays different from the ones mentioned above may be used with the present invention. Examples are infrared touchscreen panels, strain gauge touchscreen panels, surface acoustic wave or diffused laser imaging touchscreen panels, and the like. These panels should be adapted so as to recognize multiple simultaneous touches.

While specific embodiments of the invention are disclosed herein, whereas changes and modifications can be made without departing from the spirit and the scope of the invention. The present embodiments are to be considered in all respect as illustrative and non-restrictive, and all changes coming within the meaning and equivalency range of the appended claims are intended to be embraced therein.

## Claims

1. An input device, comprising:
- a multi-touch sensing display (101) adapted to detect multiple simultaneous touches or near touches to a surface (104) of the multi-touch sensing display (101) as distinct input events; and
- at least two mechanical control elements (102, 103) arranged on said surface (104) of the multi-touch sensing display (101);
wherein each of the at least two mechanical control elements (102, 103) is configured such that an actuation of the corresponding mechanical control element (102, 103) generates an input event which is detected by the multi-touch sensing display (101), wherein the multi-touch sensing display (101) is adapted to detect a simultaneous actuation of the at least two mechanical control elements (102, 103) as separate input events,
**characterized in that**
the multi-touch sensing display is adapted to display an indication regarding a value of or a type of a parameter controlled by the corresponding mechanical control element within a predetermined region adjacent to the corresponding mechanical control element, the area surrounding each of the at least two control elements being touch sensitive and configured to provide an additional possibility for a user input.

2. The input device according to claim 1, wherein each of the mechanical control elements comprises its own support structure which is different from the support structure of the other mechanical control elements and via which each mechanical control element is fixedly mounted to the surface of the multi-touch sensing display.

3. The input device according to claim 1 or 2, wherein the mechanical control element is a rotary knob, wherein each of the at least two rotary knobs comprises a moveable component and a shaft with a base via which each rotary knob is fixedly mounted to the surface of the multi-touch sensing display, wherein each of the at least two rotary knobs comprises its own base which is different from the base of the other rotary knobs.

4. The input device according to any of the preceding claims, wherein the area surrounding each mechanical control element displays the functionality of the corresponding mechanical control element, wherein the functionality of the corresponding mechanical control element is changed in accordance with a position of a detected touch.

5. The input device according to claim 1, wherein the at least two mechanical control elements (102, 103) are mechanically mounted to the surface (104) of the multi-touch sensing display (101).

6. The input device according to any of the preceding claims, wherein the at least two mechanical control elements (102, 103) comprise a trigger element (106, 107) which, when the trigger element (106, 107) touches the surface (104) at a position or comes within a predetermined distance of the surface (104) at said position, triggers the input event at said position on the surface (104), wherein the multi-touch sensing display (101) is adapted to detect said position at which the input event is triggered.

7. The input device according to claim 6, wherein each control element comprises a movable component (203, 303, 403), the trigger element (207, 307, 407) being arranged on said movable component such that when actuating the control element by moving said movable component, the multi-touch sensing display (206, 306, 406) detects the movement of the trigger element relative to the surface (205, 305, 405).

8. The input device according to any of the preceding claims, further comprising a processing unit (108), wherein the multi-touch sensing display (101) is adapted to detect a position of the input event generated by said control element and wherein the processing unit (108) is adapted to assign a value to a parameter controlled by said mechanical control element in dependence on the position at which the input event was detected.

9. The input device according to claim 8, wherein the input device (100) is connected to an audio mixing device (109), said parameter controlling a function of the audio mixing device (109).

10. Method of detecting a user input with an input device (100) comprising a multi-touch sensing display (101) adapted to detect multiple simultaneous touches or near touches to a surface (104) of the multi-touch sensing display (101) as distinct input events and at least two mechanical control elements (102, 103) arranged on said surface (104) of the multi-touch sensing display (101), the method comprising:
- in response to a simultaneous actuation of said at least two mechanical control elements, detecting at least one separate input event for each of the at least two mechanical control elements by the multi-touch sensing display; and
- for each of the at least two mechanical control elements, adjusting a parameter associated with the mechanical control element in accordance with the input event detected for the respective mechanical control element,
**characterized in that** the method further comprises:
- by the multi-touch sensing display, displaying an indication regarding a value of or a type of a parameter controlled by the corresponding mechanical control element within a predetermined region adjacent to the corresponding mechanical control element, the area surrounding the corresponding control element being touch sensitive and configured to provide an additional possibility for a user input.

11. The method according to claim 10, wherein the detecting of an input event comprises a determining of a position on said surface (104) of the multi-touch sensing display (101) at which the input event occurred and a determining a setting of the parameter associated with the corresponding mechanical control element (102, 103) on the basis of the determined position.

12. The method according to claim 10 or 11, wherein the actuation of each of the control elements comprises a moving of a trigger element arranged on the corresponding control element relative to the surface, wherein the generating of an input event comprises reflecting and/or scattering light off the trigger element onto optical sensors in response to the moving of the trigger element, the optical sensors being provided in the multi-touch sensing display adjacent to said surface, and wherein the detecting of the input event comprises a detection of said light by said optical sensors.

13. The method according to any of claims 10 to 12, wherein the actuation of the control element comprises a moving of a trigger element arranged on the control element relative to the surface, and wherein the generating of an input event comprises a disturbing of an electrical field established adjacent to said surface by the movement of the trigger element, the detecting of the input event comprising a detecting of a position at which the disturbance of the electrical field occurred.

14. An audio console (800), comprising at least one input device (801, 802) according to one of claims 1-9.

15. The audio console according to claim 14, wherein said input device (801) comprises a plurality of mechanical control elements (803) arranged in an array and regions (804, 805, 806) sensitive to simultaneous touches or near touches between said elements, the multi-touch sensing display being further configured to display information relating to parameters associated with said plurality of mechanical control elements in said regions (804, 805, 806).
